(19) Europäisches Patentamt
European Patent Office
Office européen des brevets

(11) **EP 1 844 376 B1**

(12) **FASCICULE DE BREVET EUROPEEN**

(45) Date de publication et mention
de la délivrance du brevet:
**03.12.2008 Bulletin 2008/49**

(21) Numéro de dépôt: **06709204.9**

(22) Date de dépôt: **31.01.2006**

(51) Int Cl.:
***G05D 1/08*** (2006.01)

(86) Numéro de dépôt international:
**PCT/FR2006/000209**

(87) Numéro de publication internationale:
**WO 2006/082305 (10.08.2006 Gazette 2006/32)**

(54) **PROCEDE ET DISPOSITIF DE PILOTAGE D'UN AVION EN TANGAGE**

VERFAHREN UND VORRICHTUNG ZUM FLIEGEN EINES SICH AUFBÄUMENDEN FLUGZEUGS

METHOD AND DEVICE FOR PILOTING A PITCHING AIRCRAFT

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **04.02.2005 FR 0501122**

(43) Date de publication de la demande:
**17.10.2007 Bulletin 2007/42**

(73) Titulaire: **AIRBUS France
31060 Toulouse Cédex (FR)**

(72) Inventeur: **DELANNOY, Stéphane
F-32600 Pujaudran (FR)**

(74) Mandataire: **Hauer, Bernard
Cabinet Bonnétat
29, Rue de Saint-Pétersbourg
75008 Paris (FR)**

(56) Documents cités:
**DE-A1- 2 162 349          DE-A1- 2 617 319
DE-B- 1 288 437          US-A- 3 963 197
US-A- 5 112 009**

**Description**

La présente invention concerne un procédé et un dispositif de pilotage en tangage d'un avion, en particulier d'un avion de transport.

Plus précisément, la présente invention a pour objet de corriger un phénomène d'autocabrage (connu sous le terme anglais de "Pitch-Up") qui représente un mouvement de cabrage spontané d'un avion.

Le document US 3,963,197 montre un système et une méthode pour éviter le phénomène d'autocabrage.

On sait que le moment de tangage d'un avion dépend du bras de levier entre le centre de gravité de l'avion (lieu d'application du poids) et le foyer de l'avion (lieu d'application de la portance). Sur un avion stable statiquement, le foyer est situé derrière le centre de gravité. Toutefois, en fonction du nombre de Mach de l'avion et de la valeur de son angle d'incidence, il est possible de faire décrocher l'extrémité de la voilure. Le coefficient de portance de l'avion a alors tendance à diminuer légèrement, mais surtout, en faisant avancer fortement le foyer de l'avion, le module du moment de tangage diminue nettement, puisqu'il est directement lié de façon usuelle à la longueur du bras de levier précité. Instantanément, le moment de rappel de l'avion sur une prise d'incidence est diminué. Le pilotage devient alors beaucoup plus difficile et l'oscillation d'incidence nettement moins amortie. On se trouve alors en présence du phénomène d'autocabrage ("Pitch-Up" en anglais) précité.

Pour corriger une telle instabilité (ou autocabrage), il est connu d'ajouter à la loi de pilotage en tangage une loi corrective d'anticabrage qui est sensée améliorer le comportement de l'avion dans cette phase (de vol) d'instabilité, en essayant de rendre à nouveau linéaire la variation du moment de tangage en fonction de l'angle d'incidence. Une telle loi corrective d'anticabrage est en général très difficile à régler, car elle résulte d'un compromis entre l'action de la loi de pilotage usuelle et celle de cette loi corrective ajoutée qui cherche à retrouver la linéarité précitée. Avec une telle correction, le comportement de l'avion est généralement différent du comportement qu'il avait avant l'apparition du phénomène d'autocabrage, par exemple plus amorti, mais très ralenti, avec une inertie augmentée sur les manoeuvres.

Les lois correctives d'anticabrage du type usuel précité ne sont donc pas complètement satisfaisantes.

La présente invention a pour objet de remédier à ces inconvénients. Elle concerne un procédé de pilotage en tangage d'un avion, en particulier d'un avion de transport, qui apporte une correction efficace à un phénomène d'autocabrage du type précité.

A cet effet, selon l'invention, ledit procédé selon lequel on réalise, de façon automatique et répétitive, la suite d'étapes successives suivante :

a) on prend en compte un facteur de charge commandé NZc ;
b) on estime un facteur de charge NZcg appliqué à l'avion ;
c) on calcule un ordre de commande, en prenant en compte au moins l'expression principale suivante :

$$K1.NZc + K2.NZcg$$

K1 et K2 étant deux valeurs de gain prédéterminées ; et
d) on transmet cet ordre de commande à un moyen de braquage d'au moins une gouverne de l'avion, ledit moyen de braquage déterminant un ordre de braquage représentatif dudit ordre de commande et le transmettant à au moins un actionneur de ladite gouverne,

est remarquable en ce que l'on réalise de plus, de façon automatique et répétitive, avant ladite étape c), la suite d'étapes successives suivante :

- on détermine le nombre de Mach effectif de l'avion ;
- on détermine l'angle d'incidence effectif de l'avion ;
- on compare ledit angle d'incidence effectif à une valeur de référence d'angle d'incidence ; et
- si ledit angle d'incidence effectif est supérieur à ladite valeur de référence, on détermine une valeur de gain modifiée ΔK2 à l'aide dudit nombre de Mach effectif et dudit angle d'incidence effectif, ladite valeur de gain modifiée ΔK2 remplaçant ladite valeur de gain K2 dans le calcul dudit ordre de commande à ladite étape c).

Ainsi, grâce à l'invention, on ne rajoute pas une loi corrective à la loi de pilotage usuelle (illustrée par l'expression principale précitée), mais on modifie le gain de retour en facteur de charge de cette loi de pilotage, et ceci en fonction de l'angle d'incidence et du nombre de Mach de l'avion, afin de contrer l'effet du phénomène d'autocabrage. Ceci permet notamment de conserver dans le domaine d'apparitions dudit phénomène d'autocabrage la dynamique qu'avait l'avion en boucle fermée dans le domaine linéaire et ainsi de recouvrer la performance nominale de la loi de pilotage dans ce domaine fortement non-linéaire.

De façon avantageuse, on détermine ladite valeur de référence de l'angle d'incidence, à l'aide dudit nombre de Mach effectif de l'avion.

On notera que la présente invention s'applique à toute loi de pilotage usuelle qui intègre un retour en facteur de charge (à savoir ledit facteur de charge NZcg).

Dans un mode de réalisation particulier, on réalise de plus les opérations suivantes :

- on estime une vitesse de tangage $\underline{q}$ appliquée à l'avion ;
- on estime une intégrale INZ du facteur de charge appliqué à l'avion ; et
- à l'étape c), on calcule ledit ordre de commande, en tenant compte dans ladite expression principale de l'expression auxiliaire suivante :

$$K3.q + K4.INZ$$

K3 et K4 étant deux valeurs de gain prédéterminées.

La présente invention s'applique donc également à une loi de pilotage présentant, en plus d'un retour en facteur de charge, un retour en vitesse de tangage et un retour en intégrale du facteur de charge.

Dans ce dernier cas, de façon avantageuse, ladite valeur de gain modifiée ∆K2 vérifie l'expression suivante :

$$\Delta K2 = [m.g.K5.(\alpha-\alpha 0)] / [S.Pdyn.Cz\alpha]$$

dans laquelle :

- $\underline{m}$ est la masse de l'avion ;
- $\underline{g}$ est l'accélération de la pesanteur ;
- K5 et Czα sont deux paramètres variables, dépendant du nombre de Mach effectif ;
- α est ledit angle d'incidence effectif ;
- αO est ladite valeur de référence de l'angle d'incidence ;
- S est une surface de référence de la voilure de l'avion ; et
- Pdyn est la pression dynamique.

Ainsi, la modification de la valeur de gain est basée sur des coefficients aérodynamiques (qui entrent en compte dans le calcul de ∆K2) et utilise en particulier la pression dynamique Pdyn (qui tient compte de l'effet de la vitesse).

La présente invention concerne également un dispositif de pilotage d'un avion en tangage, qui a pour objet de contrer le cas échéant un phénomène d'autocabrage du type précité.

Selon l'invention, ledit dispositif de pilotage du type comportant :

- des moyens pour recevoir un facteur de charge commandé NZc ;
- des moyens pour estimer un facteur de charge NZcg appliqué à l'avion ; et
- un moyen de calcul pour calculer un ordre de commande (selon une loi de pilotage usuelle), en prenant en compte au moins l'expression principale suivante :

$$K1.NZc + K2.NZcg$$

K1 et K2 étant deux valeurs de gain prédéterminées,
cet ordre de commande étant transmis à un moyen de braquage d'au moins une gouverne de l'avion, ledit moyen de braquage déterminant un ordre de braquage représentatif dudit ordre de commande et le transmettant à au moins un actionneur de ladite gouverne,

est remarquable en ce qu'il comporte de plus :

- des moyens pour déterminer le nombre de Mach effectif de l'avion ;

- des moyens pour déterminer l'angle d'incidence effectif de l'avion ;
- des moyens pour comparer ledit angle d'incidence effectif à une valeur de référence d'angle d'incidence ; et
- des moyens pour déterminer une valeur de gain modifiée ∆K2 à l'aide dudit nombre de Mach effectif et dudit angle d'incidence effectif si ledit angle d'incidence effectif est supérieur à ladite valeur de référence, ladite valeur de gain modifiée ∆K2 remplaçant ladite valeur de gain K2 dans le calcul dudit ordre de commande réalisé par ledit moyen de calcul.

La présente invention a donc pour but d'adapter le gain de retour (en facteur de charge NZcg) d'une loi de pilotage usuelle, au phénomène non-linéaire d'autocabrage ("Pitch-Up" en anglais).

Dans un mode de réalisation particulier :

- le dispositif de pilotage conforme à l'invention comporte de plus :

  • des moyens pour estimer une vitesse de tangage $q$ appliquée à l'avion ; et
  • des moyens pour estimer une intégrale INZ du facteur de charge appliqué à l'avion ; et

- ledit moyen de calcul est formé pour calculer ledit ordre de commande, en tenant compte dans ladite expression principale de l'expression auxiliaire suivante :

$$K3.q + K4.INZ$$

K3 et K4 étant deux valeurs de gain prédéterminées.

La présente invention concerne également un système de pilotage d'un avion qui comporte :

- un moyen de génération d'un facteur de charge commandé ;
- un dispositif de pilotage tel que celui précité, pour déterminer un ordre de commande à l'aide dudit facteur de charge commandé ; et
- un moyen de braquage qui détermine un ordre de braquage d'au moins une gouverne de l'avion à l'aide dudit ordre de commande et qui transmet cet ordre de braquage à au moins un actionneur de ladite gouverne.

Avantageusement, ledit moyen de génération d'un facteur de charge commandé comporte, de façon usuelle, un pilote automatique et/ou un dispositif de manche de commande.

En outre, dans un mode de réalisation particulier, ledit dispositif de pilotage est intégré dans un pilote automatique de l'avion.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est un graphique permettant d'expliquer la zone d'intervention de la correction apportée par un dispositif conforme à l'invention.

Les figures 3 et 4 montrent schématiquement des modes de réalisation particuliers de caractéristiques spécifiques d'un dispositif conforme à l'invention.

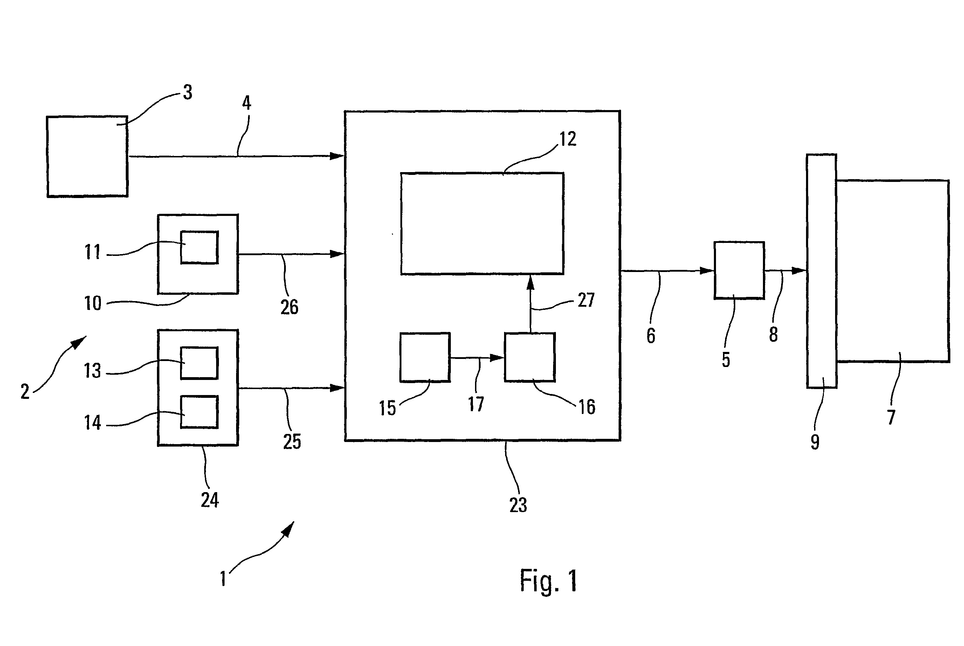

Le dispositif 1 conforme à l'invention et représenté schématiquement sur la figure 1 a pour objet de déterminer des ordres de pilotage en tangage d'un avion non représenté, en particulier d'un avion de transport. A cet effet, ce dispositif 1 fait partie d'un système de pilotage 2 usuel.

Ledit système de pilotage 2 qui est notamment destiné au pilotage en tangage de l'avion, comporte :

- un moyen 3 précisé ci-dessous de génération d'un facteur de charge commandé NZc ;
- ledit dispositif de pilotage 1 qui est relié par une liaison 4 audit moyen 3 et qui a pour objet de déterminer un ordre de commande précisé ci-dessous, à l'aide du facteur de charge commandé NZc reçu dudit moyen 3 ; et
- un moyen de braquage 5 qui est relié par une liaison 6 audit dispositif de pilotage 1 et qui détermine, à l'aide de l'ordre de commande reçu dudit dispositif 1, un ordre de braquage d'au moins une gouverne 7 de l'avion, notamment une gouverne de profondeur. Ce moyen de braquage 5 transmet cet ordre de braquage par l'intermédiaire d'une liaison 8, de façon usuelle, à au moins un actionneur 9 de ladite gouverne 7.

En outre, ledit dispositif de pilotage 1 est du type comportant :

- des moyens, en particulier une liaison 4, permettant de recevoir un facteur de charge commandé NZc ;
- un ensemble 10 de sources d'informations de retour, qui comporte notamment des moyens 11 pour estimer un facteur de charge NZcg appliqué à l'avion ; et
- un moyen de calcul 12 pour calculer un ordre de commande, conformément à une loi de pilotage, en prenant en compte au moins l'expression principale (1) suivante :

$$K1.NZc + K2.NZcg$$

dans laquelle K1 et K2 sont deux valeurs de gain prédéterminées.

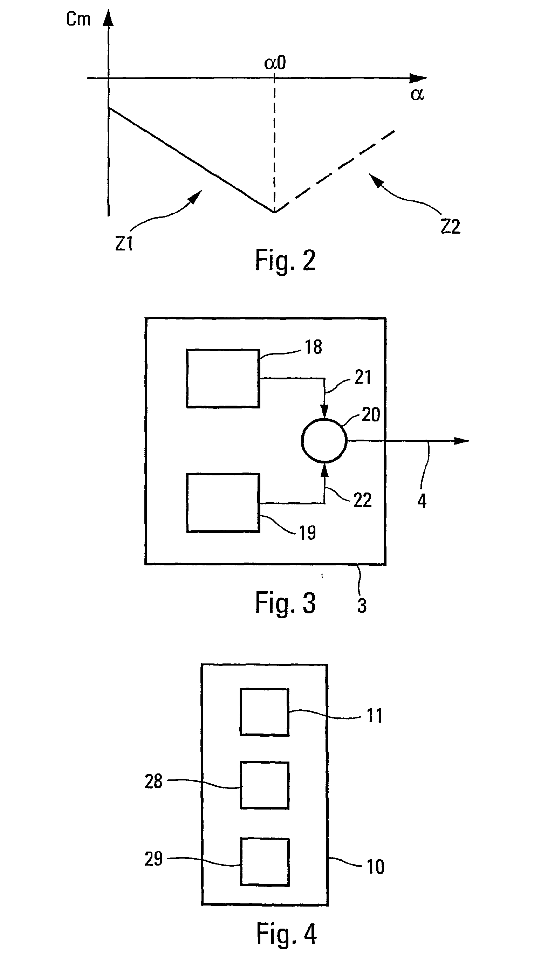

Selon l'invention, ledit dispositif 1 est perfectionné de manière à pouvoir apporter une correction efficace à un phénomène d'autocabrage de l'avion. Un tel phénomène d'autocabrage apparaît lorsque l'angle d'incidence effectif $\alpha$ de l'avion dépasse une valeur de référence $\alpha0$ d'angle d'incidence, comme représenté sur le graphique de la figure 2 qui montre l'évolution du moment de tangage Cm de l'avion autour de son centre de gravité, en fonction dudit angle d'incidence effectif $\alpha$. Dans une zone Z1 correspondant à des valeurs d'angle d'incidence inférieures à la valeur de référence $\alpha0$, on est en présence d'un comportement linéaire normal de l'avion. En outre, un domaine d'autocabrage connu sous le terme anglais de "Pitch-up", qui est un domaine fortement non linéaire, est illustré par une zone Z2 qui correspond à des valeurs d'angle d'incidence supérieures à $\alpha0$.

Pour ce faire, ledit dispositif 1 comporte de plus, selon l'invention :

- des moyens 13 pour déterminer, de façon usuelle, le nombre de Mach effectif de l'avion ;
- des moyens 14 pour déterminer, également de façon usuelle, l'angle d'incidence effectif $\alpha$ de l'avion ;
- des moyens 15 pour comparer ledit angle d'incidence effectif $\alpha$ reçu des moyens 14 la valeur de référence $\alpha0$ d'angle d'incidence, qui est variable comme précisé ci-dessous ; et
- des moyens 16 qui sont reliés par une liaison 17 auxdits moyens 1 5, pour déterminer une valeur de gain modifiée $\Delta$K2 dès que lesdits moyens 15 indiquent que l'angle d'incidence effectif $\alpha$ est supérieur à ladite valeur de référence $\alpha0$, c'est-à-dire dès que l'avion se trouve dans un domaine d'autocabrage Z2. Lesdits moyens 16 calculent ladite valeur de gain modifiée $\Delta$K2 à l'aide dudit nombre de Mach effectif reçu desdits moyens 13 et dudit angle d'incidence effectif $\alpha$ reçu desdits moyens 14, et ils transmettent (liaison 27) la valeur de gain modifiée $\Delta$k2 ainsi calculée audit moyen de calcul 12 qui remplace dans l'expression principale (1) précitée, ladite valeur de gain K2 par cette valeur de gain modifiée $\Delta$K2.

De plus, lesdits moyens 15 déterminent ladite valeur de référence $\alpha0$ de l'angle d'incidence, et ceci de façon usuelle à l'aide du nombre de Mach effectif reçu desdits moyens 13.

On notera que la présente invention s'applique à toute loi de pilotage usuelle qui intègre un retour en facteur de charge (à savoir ledit facteur de charge NZcg). Ainsi, grâce à l'invention, on ne rajoute pas une loi corrective à la loi de pilotage usuelle (illustrée par l'expression principale (1) précitée), mais on modifie le gain $\Delta$K2 de retour en facteur de charge NZcg de cette loi de pilotage, et ceci en fonction de l'angle d'incidence effectif $\alpha$ et du nombre de Mach effectif de l'avion, afin de contrer les effets dudit phénomène d'autocabrage. Ceci permet notamment de conserver dans le domaine Z2 d'apparitions dudit phénomène d'autocabrage la dynamique qu'avait l'avion en boucle fermée dans le domaine Z1 linéaire, et ainsi de recouvrer la performance nominale de la loi de pilotage dans ce domaine Z2 fortement non-linéaire.

Dans un mode de réalisation particulier représenté sur la figure 3, ledit moyen 3 de génération d'un facteur de charge commandé NZc comporte, de façon usuelle, un pilote automatique 18 qui engendre un premier facteur de charge commandé NZc1 et un dispositif usuel 19 de manche de commande qui comporte un manche de commande actionnable par un pilote et qui engendre un second facteur de charge commandé NZc2 correspondant, ainsi qu'un moyen de calcul 20 qui est relié par l'intermédiaire de liaisons 21 et 22 respectivement audit pilote automatique 18 et audit dispositif 19 et qui fait la somme des deux facteurs de charge commandés NZc1 et NZc2, pour obtenir ledit facteur de charge commandé NZc qui est transmis au dispositif 1 par l'intermédiaire de la liaison 4.

En outre, dans un mode de réalisation particulier :

- le moyen de calcul 12 et les moyens 15 et 16 sont intégrés dans une unité centrale 23 ;
- les moyens 13 et 14 sont intégrés dans un ensemble 24 de sources d'informations, qui est relié par l'intermédiaire d'une liaison 25 à ladite unité centrale 23 ; et
- ledit ensemble 10 de sources d'informations est relié par une liaison 26 à ladite unité centrale 23.

En outre, dans un mode de réalisation particulier, ledit dispositif de pilotage 1 est intégré dans un pilote automatique de l'avion.

On notera que la présente invention s'applique également à une loi de pilotage présentant, en plus d'un retour en facteur de charge NZcg, un retour en vitesse de tangage q et un retour en intégrale INZ du facteur de charge.

A cet effet, ledit ensemble 10 comporte, en plus desdits moyens 11, comme représenté sur la figure 4 :

- des moyens 28 pour estimer une vitesse de tangage q appliquée à l'avion ; et
- des moyens 29 pour estimer une intégrale INZ du facteur de charge appliqué à l'avion.

Dans ce cas, ledit moyen de calcul 12 est formé pour calculer ledit ordre de commande, en tenant compte dans ladite expression principale (1) de l'expression auxiliaire (2) suivante :

$$K3.q \ + \ K4.INZ$$

K3 et K4 étant deux valeurs de gain prédéterminées.

De plus, dans ce cas, lesdits moyens 16 déterminent ladite valeur de gain modifiée ΔK2, directement à partir de l'expression (3) suivante :

$$\Delta K2 \ = \ [m.g.K5.(\alpha-\alpha 0)] \ / \ [S.Pdyn.Cz\alpha]$$

dans laquelle :

- $m$ est la masse de l'avion ;
- $g$ est l'accélération de la pesanteur ;
- K5 et $Cz\alpha$ sont deux paramètres variables, dépendant du nombre de Mach effectif. Il en est de même de $\alpha 0$, comme précisé ci-dessus. De préférence, ces paramètres $\alpha 0$, K5 et $Cz\alpha$ sont définis sous forme de tables, en fonction dudit nombre de Mach effectif ;
- S est une surface de référence de la voilure de l'avion ; et
- Pdyn est la pression dynamique.

On précise à présent comment est obtenue cette expression (3) de la valeur de gain modifiée ΔK2. Pour ce faire, on utilise notamment les notations suivantes :

- K1, K2, K3 et K4 : valeurs de gain précitées, à savoir respectivement pour NZc et pour les retours en NZcg, q et INZ ;
- Nz : variation du facteur de charge verticale par rapport à la valeur d'équilibre ;
- q : vitesse de tangage ;
- $\alpha$ : angle d'incidence ;
- $\delta q$ : organe de commande en tangage (empennage arrière) ;
- Xf, Xg : positions en mètres respectivement du foyer et du centre de gravité, le long de l'axe longitudinal de l'avion ;
- Cm : moment de tangage de l'avion autour du centre de gravité ;
- $Cm\alpha i$ : moment de tangage pour un angle d'incidence $\alpha i$ ;
- $Cz\alpha$ : coefficient de portance de l'avion. La force de portance Cz est obtenue par $Cz=Cz\alpha.\alpha+Cz\alpha 0$, $Cz\alpha 0$ étant un paramètre prédéterminé ;
- $Cz\delta q$ : coefficient de portance de l'empennage arrière ;
- Va : vitesse aérodynamique de l'avion ;
- g : accélération de la pesanteur ;
- B : inertie en tangage de l'avion ;
- Lcma : corde moyenne aérodynamique ;
- S : surface ailaire de l'avion ;
- $\rho$ : coefficient d'aérodynamique ;
- D : distance entre le foyer et le centre de gravité de l'avion ; et
- Pdyn : pression dynamique.

On sait que les équations régissant la dynamique de l'avion sont en boucle ouverte (dans cette représentation, la valeur $\alpha$ est la variation d'incidence par rapport à la position d'équilibre) :

$$\begin{bmatrix} \dot{\alpha} \\ \dot{q} \end{bmatrix} = \begin{bmatrix} p\alpha & 1 \\ m\alpha & mq \end{bmatrix} \begin{bmatrix} \alpha \\ q \end{bmatrix} + \begin{bmatrix} 0 \\ m\delta q \end{bmatrix} \delta q$$

$$\frac{q}{\delta q} = \frac{m\delta q \cdot (s - p\alpha)}{s^2 - (mq + p\alpha) \cdot s + mq \cdot p\alpha - m\alpha}$$

$$\frac{Nz}{\delta q} = -\frac{Va}{g} \cdot \frac{p\alpha}{s - p\alpha} \cdot \frac{q}{\delta q} \quad \text{en utilisant la relation} \quad Nz = \frac{Va}{g} \cdot (q - \dot{\alpha})$$

Les équations de la boucle fermée sont :

$$\frac{q}{Zc} = \frac{m\delta q \cdot (s - p\alpha) \cdot [K1 \cdot s - K4]}{s^3 + (-mq - p\alpha - m\delta q.K3) \cdot s^2 + (mq \cdot p\alpha - m\alpha + m\delta q.p\alpha.K3 + \frac{Va}{g} \cdot p\alpha.m\delta q.K2) \cdot s + \frac{Va}{g} \cdot p\alpha.m\delta q.K4}$$

$$\frac{Zcg}{Zc} = \frac{-\frac{Va}{g} \cdot m\delta q.p\alpha \cdot [K1 \cdot s - K4]}{s^3 + (-mq - p\alpha - m\delta q.K3) \cdot s^2 + (mq \cdot p\alpha - m\alpha + m\delta q.p\alpha.K3 + \frac{Va}{g} \cdot p\alpha.m\delta q.K2) \cdot s + \frac{Va}{g} \cdot p\alpha.m\delta q.K}$$

Le dénominateur de ces deux dernières équations peut également s'écrire, par identification du placement de pôles en boucle fermée :

$$D = (s + \frac{1}{\tau}) \cdot (s^2 + 2.\xi bf.\omega bf.s + \omega bf^2),$$

soit encore

$$D = s^3 + s^2 \cdot \left(2.\xi bf.\omega bf + \frac{1}{\tau}\right) + s.\left(\omega bf^2 + \frac{2.\xi bf.\omega bf}{\tau}\right) + \frac{\omega bf^2}{\tau}$$

Le coefficient $Cm\alpha$ n'intervient dans cette modélisation que dans le terme $m\alpha$, par la relation :

$$m\alpha = \frac{1}{B}.\frac{1}{2}.\rho.S.Lcma.Va^2.Cm\alpha$$

Une hypothèse réaliste de cette loi est que seule l'évolution non-linéaire du terme Cm$\alpha$ dans le domaine Z2 d'autocabrage a une influence sur la dégradation du comportement de l'avion, en raison de la rapide variation du bras de levier [Xf-Xg]. L'évolution du terme Cz$\alpha$ est négligeable.

Dans ces conditions, afin de conserver la dynamique désirée de l'avion, en présence d'un phénomène d'autocabrage, et en considérant que le coefficient m$\alpha$ a varié de $\Delta$m$\alpha$, il faut et suffit de modifier le gain K2 d'une valeur $\Delta$K2 suivante :

$$\Delta K2 = \frac{\Delta m\alpha}{\dfrac{Va}{g}.p\alpha.m\delta q}$$

On a les relations :

$$\Delta m\alpha = \frac{1}{B}.\frac{1}{2}.\rho.S.Lcma.Va^2.\Delta Cm\alpha$$

$$m\delta q = \frac{1}{B}.\frac{1}{2}.\rho.S.Lcma.Va^2.Cm\delta q$$

$$Cm\delta q = \frac{D}{Lcma}.Cz\delta q,$$

qui reste à peu près constant

$$p\alpha = \frac{-1}{m.Va}.\frac{1}{2}.\rho.S.Va^2.Cz\alpha$$

$$Pdyn = \frac{1}{2}.\rho.Va^2$$

Ces équations aboutissent à la relation :

$$\Delta K2 = \frac{-m.g}{S.Pdyn.Cz\alpha}.\frac{\Delta Cm\alpha}{Cm\delta q}$$

De plus, on prend en compte les deux hypothèses suivantes, physiquement très réalistes :

1 / quand $\alpha$ dépasse la valeur $\alpha0$, $Cm\alpha$ qui était constant jusque-là (noté $Cm\alpha0$) se met à varier proportionnellement à $(\alpha-\alpha0)$, tant que $\alpha$ ne devient pas trop grand $Cm\alpha$ $(\alpha > \alpha0) = Cm\alpha0 + k. (\alpha - \alpha0)$ avec k un cofficient constant ; et

2 / $Cm\delta q$ est une fonction simple du nombre de Mach.

On obtient alors la relation finale suivante [expression (3) précitée] donnant la variation de gain modifiée $\Delta K2$, pour $\alpha > \alpha0$ (et $\alpha0$ fonction du nombre de Mach) :

$$\Delta K2 = [m.g.K5.(\alpha-\alpha0)] / [S.Pdyn.Cz\alpha]$$

dans laquelle $Cz\alpha$ et K5 varient en fonction du nombre de Mach.

Par ailleurs, concernant le mode de réalisation le plus général incluant uniquement un retour en facteur de charge NZcg, on sait que la fonction de transfert en boucle fermée s'écrit :

$$\frac{Nz}{\delta qcom} = \frac{-\frac{Va}{g}.p\alpha.m\delta q}{s^2 - (mq + p\alpha).s + mq.p\alpha - m\alpha + \frac{V}{g}.p\alpha.m\delta q.K2}$$

K2 apparaît dans le dénominateur de cette fonction de transfert à boucle fermée, uniquement dans un terme, et à chaque fois sous la forme suivante :

$$R - m\alpha + \frac{Va}{g}.p\alpha.m\delta q.K2$$

Dans cette formule, le terme R représente une écriture générale pour des éléments qui ne dépendent ni de $m\alpha$, ni de K2.

La valeur de gain modifiée $\Delta K2$ (pour le cas général avec uniquement un retour en NZcg) peut être déterminée à partir de ces dernières expressions, de manière similaire au mode de calcul présenté ci-dessus relatif à des retours simultanés en INZ, q et NZcg.

**Revendications**

1. Procédé de pilotage d'un avion en tangage, procédé selon lequel on réalise, de façon automatique et répétitive, la suite d'étapes successives suivante :

   a) on prend en compte un facteur de charge commandé NZc ;
   b) on estime un facteur de charge NZcg appliqué à l'avion ;
   c) on calcule un ordre de commande, en prenant en compte au moins l'expression principale suivante :

$$K1.NZc + K2.NZcg$$

   K1 et K2 étant deux valeurs de gain prédéterminées ; et
   d) on transmet cet ordre de commande à un moyen de braquage (5) d'au moins une gouverne (7) de l'avion, ledit moyen de braquage (5) déterminant un ordre de braquage représentatif dudit ordre de commande et le transmettant à au moins un actionneur (9) de ladite gouverne (7),

**caractérisé en ce que** l'on réalise de plus, de façon automatique et répétitive, avant ladite étape c), la suite d'étapes successives suivante :

- on détermine le nombre de Mach effectif de l'avion ;
- on détermine l'angle d'incidence effectif de l'avion ;
- on compare ledit angle d'incidence effectif à une valeur de référence d'angle d'incidence ; et
- si ledit angle d'incidence effectif est supérieur à ladite valeur de référence, on détermine une valeur de gain modifiée ΔK2 à l'aide dudit nombre de Mach effectif et dudit angle d'incidence effectif, ladite valeur de gain modifiée ΔK2 remplaçant ladite valeur de gain K2 dans le calcul dudit ordre de commande à ladite étape c).

2.  Procédé selon la revendication 1,
    **caractérisé en ce que** l'on détermine ladite valeur de référence de l'angle d'incidence, à l'aide dudit nombre de Mach effectif.

3.  Procédé selon l'une des revendications 1 et 2,
    **caractérisé en ce que**, de plus :

    - on estime une vitesse de tangage q appliquée à l'avion ;
    - on estime une intégrale INZ du facteur de charge appliqué à l'avion ; et
    - à l'étape c), on calcule ledit ordre de commande, en tenant compte dans ladite expression principale de l'expression auxiliaire suivante :

$$K3.q + K4.INZ$$

K3 et K4 étant deux valeurs de gain prédéterminées.

4.  Procédé selon la revendication 3,
    **caractérisé en ce que** ladite valeur de gain modifiée ΔK2 vérifie l'expression suivante :

$$\Delta K2 = [m.g.K5.(\alpha-\alpha 0)] / [S.Pdyn.Cz\alpha]$$

dans laquelle :

- $m$ est la masse de l'avion ;
- $g$ est l'accélération de la pesanteur ;
- K5 et Czα sont deux paramètres variables, dépendant du nombre de Mach effectif ;
- α est ledit angle d'incidence effectif ;
- α0 est ladite valeur de référence de l'angle d'incidence ;
- S est une surface de référence de la voilure de l'avion ; et
- Pdyn est la pression dynamique.

5.  Dispositif de pilotage d'un avion en tangage, ledit dispositif (1) comportant :

    - des moyens (4) pour recevoir un facteur de charge commandé NZc ;
    - des moyens (11) pour estimer un facteur de charge NZcg appliqué à l'avion ; et
    - un moyen de calcul (12) pour calculer un ordre de commande, en prenant en compte au moins l'expression principale suivante :

$$K1.NZc + K2.NZcg$$

K1 et K2 étant deux valeurs de gain prédéterminées,
cet ordre de commande étant transmis à un moyen de braquage (5) d'au moins une gouverne (7) de l'avion,

ledit moyen de braquage (5) déterminant un ordre de braquage représentatif dudit ordre de commande et le transmettant à au moins un actionneur (9) de ladite gouverne (7),

**caractérisé en ce qu'**il comporte de plus :

- des moyens (13) pour déterminer le nombre de Mach effectif de l'avion ;
- des moyens (14) pour déterminer l'angle d'incidence effectif de l'avion ;
- des moyens (15) pour comparer ledit angle d'incidence effectif à une valeur de référence d'angle d'incidence ; et
- des moyens (16) pour déterminer une valeur de gain modifiée ΔK2 à l'aide dudit nombre de Mach effectif et dudit angle d'incidence effectif si ledit angle d'incidence effectif est supérieur à ladite valeur de référence, ladite valeur de gain modifiée ΔK2 remplaçant ladite valeur de gain K2 dans le calcul dudit ordre de commande réalisé par ledit moyen de calcul (12).

**6.** Dispositif selon la revendication 5,
**caractérisé en ce que** :

- ledit dispositif (1) comporte de plus :

  • des moyens (28) pour estimer une vitesse de tangage q appliquée à l'avion ; et
  • des moyens (29) pour estimer une intégrale INZ du facteur de charge appliqué à l'avion ; et

- ledit moyen de calcul (12) est formé pour calculer ledit ordre de commande, en tenant compte dans ladite expression principale de l'expression auxiliaire suivante :

$$K3.q + K4.INZ$$

K3 et K4 étant deux valeurs de gain prédéterminées.

**7.** Système de pilotage d'un avion,
**caractérisé en ce qu'**il comporte :

- un moyen (3) de génération d'un facteur de charge commandé ;
- un dispositif de pilotage (1) tel que celui spécifié sous l'une des revendications 5 et 6, pour déterminer un ordre de commande à l'aide dudit facteur de charge commandé ; et
- un moyen de braquage (5) qui détermine un ordre de braquage d'au moins une gouverne (7) de l'avion à l'aide dudit ordre de commande et qui transmet cet ordre de braquage à au moins un actionneur (9) de ladite gouverne (7).

**8.** Système selon la revendication 7,
**caractérisé en ce que** ledit moyen (3) de génération d'un facteur de charge commandé comporte un pilote automatique (18).

**9.** Système selon l'une des revendications 7 et 8,
**caractérisé en ce que** ledit moyen (3) de génération d'un facteur de charge commandé comporte un dispositif (19) de manche de commande.

**10.** Système selon l'une des revendications 7 à 9,
**caractérisé en ce que** ledit dispositif de pilotage (1) est intégré dans un pilote automatique.

**11.** Avion,
**caractérisé en ce qu'**il comporte un dispositif (1) susceptible de mettre en oeuvre le procédé spécifié sous l'une quelconque des revendications 1 à 4.

**12.** Avion,
**caractérisé en ce qu'**il comporte un dispositif (1) tel que celui spécifié sous l'une des revendications 5 et 6.

**13.** Avion,
**caractérisé en ce qu'**il comporte un système (1) tel que celui spécifié sous l'une quelconque des revendications 7 à 10.

**Claims**

**1.** A method of controlling of an aircraft in terms of pitch, according to which method the following series of successive steps is carried out, in an automatic and repetitive manner:

a) a controlled load factor NZc is taken into account;
b) a load factor NZcg applied to the aircraft is estimated;
c) a control command is calculated by taking into account at least the following main expression:

$$K1.NZc + K2.NZcg$$

K1 and K2 being two predetermined gain values; and
d) this control command is transmitted to a deflection means (5) of at least one rudder (7) of the aircraft, said deflection means (5) generating a deflection command representative of said control command and transmitting it to at least one actuator (9) of said rudder (7),

**characterized in that** the following series of successive steps is carried out in addition, in an automatic and repetitive manner, before said step c):

- the actual Mach number of the aircraft is determined;
- the actual angle of incidence of the aircraft is determined;
- said actual angle of incidence is compared to an angle-of-incidence reference value; and
- if said actual angle of incidence is greater than said reference value, a modified gain value ΔK2 is determined with the aid of said actual Mach number and of said actual angle of incidence, said modified gain value ΔK2 replacing said gain value K2 in the calculation of said control command in said step c).

**2.** The method as claimed in claim 1,
**characterized in that** said reference value of the angle of incidence is determined with the aid of said actual Mach number.

**3.** The method as claimed in one of claims 1 and 2,
**characterized in that**, in addition:

- a pitch rate q applied to the aircraft is estimated;
- an integral INZ of the load factor applied to the aircraft is estimated; and
- in step c), said control command is calculated by taking account, in said main expression, of the following auxiliary expression:

$$K3.q + K4.INZ$$

K3 and K4 being two predetermined gain values.

**4.** The method as claimed in claim 3,
**characterized in that** said modified gain value ΔK2 satisifies the following expression:

$$\Delta K2 = [m.g.K5.(\alpha-\alpha 0)]/[S.Pdyn.Cz\alpha]$$

in which:

- $m$ is the mass of the aircraft;
- $g$ is the acceleration due to gravity;
- K5 and $Cz\alpha$ are two variable parameters, dependent on the actual Mach number;
- $\alpha$ is said actual angle of incidence;
- $\alpha0$ is said angle-of-incidence reference value;
- S is a reference area of the aircraft wing; and
- Pdyn is the dynamic pressure.

5. A device for controlling an aircraft in terms of pitch, said device (1) comprising:

- means (4) for receiving a controlled load factor NZc;
- means (11) for estimating a load factor NZcg applied to the aircraft; and
- a calculation means (12) for calculating a control command by taking into account at least the following main expression:

$$K1.NZc + K2.NZcg$$

K1 and K2 being two predetermined gain values,
this control command being transmitted to a deflection means (5) of at least one rudder (7) of the aircraft, said deflection means (5) generating a deflection command representative of said control command and transmitting it to at least one actuator (9) of said rudder (7),

**characterized in that** it comprises in addition:

- means (13) for determining the actual Mach number of the aircraft;
- means (14) for determining the actual angle of incidence of the aircraft;
- means (15) for comparing said actual angle of incidence to an angle-of-incidence reference value; and
- means (16) for determining a modified gain value $\Delta$K2 with the aid of said actual Mach number and of said actual angle of incidence if said actual angle of incidence is greater than said reference value, said modified gain value $\Delta$K2 replacing said gain value K2 in the calculation of said control command carried out by said calculation means (12).

6. The device as claimed in claim 5,
**characterized in that**:

- said device (1) comprises in addition:

■ means (28) for estimating a pitch rate $q$ applied to the aircraft; and
■ means (29) for estimating an integral INZ of the load factor applied to the aircraft; and

- said calculation means (12) is formed so as to calculate said control command by taking account, in said main expression, of the following auxiliary expression:

$$K3.q + K4.INZ$$

K3 and K4 being two predetermined gain values.

7. A system for controlling an aircraft,
**characterized in that** it comprises:

- a means (3) for generating a controlled load factor;
- a control device (1) such as that specified in one of claims 5 and 6, for determining a control command with the aid of said controlled load factor; and
- a deflection means (5) which determines a deflection command for at least one rudder (7) of the aircraft with the aid of said control command and which transmits this deflection command at least one actuator (9) of said rudder (7).

8. The system as claimed in claim 7,
**characterized in that** said means (3) for generating a controlled load factor comprises an automatic pilot (18).

9. The system as claimed in one of claims 7 and 8,
**characterized in that** said means (3) for generating a controlled load factor comprises a control stick device (19).

10. The system as claimed in one of claims 7 to 9,
**characterized in that** said control device (1) is integrated within an automatic pilot.

11. An aircraft,
**characterized in that** it comprises a device (1) capable of implementing the method specified in any one of claims 1 to 4.

12. An aircraft,
**characterized in that** it comprises a device (1) such as that specified in one of claims 5 and 6.

13. An aircraft,
**characterized in that** it comprises a system (1) such as that specified in any one of claims 7 to 10.


**Patentansprüche**

1. Verfahren zur Steuerung eines sich aufbäumenden Flugzeugs, wobei bei dem Verfahren automatisch und wiederholt die nachfolgend genannte Folge von aufeinanderfolgenden Verfahrensschritten ausgeführt wird:

a) ein eingestelltes Lastvielfaches NZc wird berücksichtigt,
b) ein auf das Flugzeug wirkendes Lastvielfaches NZcg wird berechnet,
c) ein Steuerbefehl wird berechnet unter Berücksichtigung zumindest des folgenden Hauptausdrucks:

$$K1.NZc + K2.NZcg,$$

wobei K1 und K2 zwei vorgegebene Verstärkungsfaktorwerte sind und
d) dieser Steuerbefehl wird an ein Mittel (5) zum Ausschlagen mindestens einer Steuerfläche (7) des Flugzeugs übertragen, wobei das Ausschlagmittel (5) einen Ausschlagbefehl bestimmt, der für den Steuerbefehl repräsentativ ist und ihn an mindestens einen Stellantrieb (9) der Steuerfläche (7) überträgt,

**dadurch gekennzeichnet, dass** zusätzlich automatisch und wiederholt vor dem Schritt c) die nachfolgend genannte Folge von aufeinanderfolgenden Verfahrensschritten ausgeführt wird:

- die tatsächliche Mach-Zahl des Flugzeugs wird bestimmt
- der tatsächliche Anstellwinkel des Flugzeugs wird bestimmt,
- der tatsächliche Anstellwinkel wird mit einem Referenzwert des Anstellwinkels verglichen und
- wenn der tatsächliche Anstellwinkel größer als der Referenzwert ist, wird mithilfe der tatsächlichen Mach-Zahl und des tatsächlichen Anstellwinkels ein veränderter Verstärkungsfaktorwert ΔK2 bestimmt, wobei der veränderte Verstärkungsfaktorwert ΔK2 den Verstärkungsfaktorwert K2 in der Berechnung des Steuerbefehls in Schritt c) ersetzt.

2. Verfahren nach Anspruch 1,
**dadurch gekennzeichnet, dass** der Referenzwert des Anstellwinkels mithilfe der tatsächlichen Mach-Zahl bestimmt wird.

3. Verfahren nach Anspruch 1 oder 2,
**dadurch gekennzeichnet, dass** zusätzlich:

- eine auf das Flugzeug wirkende Nickgeschwindigkeit q berechnet wird,
- ein auf das Flugzeug wirkendes Integral INZ des Lastvielfachen berechnet wird und
- in Schritt c) der Steuerbefehl berechnet wird, indem in dem Hauptausdruck der folgende zusätzliche Ausdruck berücksichtigt wird:

$$K3.q + K4.INZ,$$

wobei K3 und K4 zwei vorgegebene Verstärkungsfaktorwerte sind.

4. Verfahren nach Anspruch 3,
**dadurch gekennzeichnet, dass** der veränderte Verstärkungsfaktorwert ΔK2 den Ausdruck erfüllt:

$$\Delta K2 = [m.g.K5.(\alpha-\alpha 0)] / [S.Pdyn.Cz\alpha]$$

in dem:

- m die Masse des Flugzeugs ist,
- g die Erdbeschleunigung ist,
- K5 und Czα zwei variable, von der tatsächlichen Mach-Zahl abhängige Parameter sind,
- α der tatsächliche Anstellwinkel ist,
- α0 der Referenzwert des Anstellwinkels ist,
- S eine Referenzfläche des Flugzeugtragwerks ist und
- Pdyn der dynamische Druck ist.

5. Vorrichtung zur Steuerung eines sich aufbäumenden Flugzeugs, wobei die Vorrichtung (1) Folgendes umfasst:

- Mittel (4) zum Empfangen eines eingestellten Lastvielfachen NZc,
- Mittel (11) zum Berechnen eines auf das Flugzeug wirkenden Lastvielfachen NZcg und
- ein Berechnungsmittel (12) zum Berechnen eines Steuerbefehls unter Berücksichtigung zumindest des folgenden Hauptausdrucks:

$$K1.NZc + K2.NZcg,$$

wobei K1 und K2 zwei Verstärkungsfaktorwerte sind
und dieser Steuerbefehl an ein Mittel (5) zum Ausschlagen mindestens einer Steuerfläche (7) des Flugzeugs übertragen wird, wobei das Ausschlagmittel (5) einen Ausschlagbefehl bestimmt, der für den Steuerbefehl repräsentativ ist und ihn an mindestens einen Stellantrieb (9) der Steuerfläche (7) überträgt,
**dadurch gekennzeichnet, dass** sie zusätzlich Folgendes umfasst:

- Mittel (13) zum Bestimmen der tatsächlichen Mach-Zahl des Flugzeugs,
- Mittel (14) zum Bestimmen des tatsächlichen Anstellwinkels des Flugzeugs,
- Mittel (15) zum Vergleichen des tatsächlichen Anstellwinkels mit einem Referenzwert des Anstellwinkels und
- Mittel (16) zum Bestimmen eines veränderten Verstärkungsfaktorwertes ΔK2 mithilfe der tatsächlichen Mach-Zahl und des tatsächlichen Anstellwinkels, wenn der tatsächliche Anstellwinkel größer als der Referenzwert ist, wobei der veränderte Verstärkungsfaktorwert ΔK2 den Verstärkungsfaktorwert K2 in der von dem Berechnungsmittel (12) ausgeführten Berechnung des Steuerbefehls ersetzt.

6. Vorrichtung nach Anspruch 5,
**dadurch gekennzeichnet, dass**:

- die Vorrichtung (1) zusätzlich Folgendes umfasst:

  • Mittel (28) zum Berechnen einer auf das Flugzeug wirkenden Nickgeschwindigkeit g und

• Mittel (29) zum Berechnen eines Integrals INZ des auf das Flugzeug wirkenden Lastvielfachen und

- das Berechnungsmittel (12) dazu gebildet ist, den Steuerbefehl zu berechnen, indem in dem Hauptausdruck der folgende zusätzliche Ausdruck berücksichtigt wird:

$$K3.q + K4.INZ,$$

wobei K3 und K4 zwei vorgegebene Verstärkungsfaktorwerte sind.

7.  Flugsteuerungssystem eines Flugzeugs,
    **dadurch gekennzeichnet, dass** es Folgendes umfasst:

    - ein Mittel (3) zum Erzeugen eines eingestellten Lastvielfachen
    - eine Steuerungsvorrichtung (1) wie die unter einem der Ansprüche 5 und 6 spezifizierte zum Bestimmen eines Steuerbefehls mittels des eingestellten Lastvielfachen und
    - ein Mittel (5) zum Ausschlagen, das mithilfe des Steuerbefehls einen Ausschlagbefehl mindestens einer Steuerfläche (7) des Flugzeugs bestimmt und diesen Ausschlagbefehl an mindestens einen Stellantrieb (9) der Steuerfläche (7) überträgt.

8.  System nach Anspruch 7,
    **dadurch gekennzeichnet, dass** das Mittel (3) zum Erzeugen eines eingestellten Lastvielfachen einen Autopiloten (18) umfasst.

9.  System nach Anspruch 7 oder 8,
    **dadurch gekennzeichnet, dass** das Mittel (3) zum Erzeugen eines eingestellten Lastvielfachen eine Steuerknüppelvorrichtung (19) umfasst.

10. System nach einem der Ansprüche 7 bis 9,
    **dadurch gekennzeichnet, dass** die Steuerungsvorrichtung (1) in einen Autopiloten integriert ist.

11. Flugzeug,
    **dadurch gekennzeichnet, dass** es eine Vorrichtung (1) aufweist, die geeignet ist, das unter einem der Ansprüche 1 bis 4 spezifizierte Verfahren auszuführen.

12. Flugzeug,
    **dadurch gekennzeichnet, dass** es eine Vorrichtung (1) wie die unter einem der Ansprüche 5 und 6 spezifizierte aufweist.

13. Flugzeug,
    **dadurch gekennzeichnet, dass** es ein System (1) wie das unter einem der Ansprüche 7 bis 10 spezifizierte aufweist.

Fig. 1

Cm

α0

α

Z1

Z2

Fig. 2

18

21

20

22

19

4

3

Fig. 3

11

28

29

10

Fig. 4

**RÉFÉRENCES CITÉES DANS LA DESCRIPTION**

**Documents brevets cités dans la description**

- US 3963197 A